# EUROPEAN PATENT SPECIFICATION

(11) **EP 2 024 062 B1**
(45) Date of publication and mention of the grant of the patent: **15.02.2012**
(21) Application number: 07835735.7
(22) Date of filing: 26.04.2007
(51) Int. Cl.: B01D 53/62

(54) **CARBON DIOXIDE CAPTURE AND RELATED PROCESSES**
KOHLENDIOXIDERFASSUNG UND ZUGEHÖRIGE VERFAHREN
CAPTURE DE DIOXYDE DE CARBONE ET PROCÉDÉS ASSOCIÉS

(30) Priority: 27.04.2006 US 795419 P; 14.09.2006 US 844472 P
(43) Date of publication of application: 18.02.2009
(60) Divisional application: 10192919.8
(73) Proprietor: President and Fellows of Harvard College, Cambridge, MA 02138 (US); The Penn State Research Foundation, University Park, PA 16802-7000 (US)
(72) Inventor: HOUSE, Kurt, Z., Cambridge, MA 02139 (US); HOUSE, Christopher, H., State College, PA 16803 (US); AZIZ, Michael, J., Concord, MA 01742 (US); SCHRAG, Daniel, Paul, Cambridge, MA 02138 (US)
(74) Representative: HOFFMANN EITLE
(86) International application number: PCT/US2007/010032
(87) International publication number: WO 2008/018928

(56) References cited:
- WO-A-2006/034339
- US-A- 1 897 725
- US-A1- 2001 022 952
- US-A1- 2006 051 274

## Description

### Related Applications

This application claims priority to U.S. Provisional Patent Application Serial No. 60/795,419, filed April 27, 2006 and U.S. Provisional Patent Application Serial No. 60/844,472, filed September 14, 2006, the disclosures both of which are incorporated herein by reference.

### Field of Invention

The invention relates generally to the capture of carbon dioxide from the atmosphere and/or from point sources (e.g., power plants, chemical plants, natural gas fields, oil fields, industrial sites).

### Background of Invention

Due to the combustion of fossil fuels, the atmospheric concentration of carbon dioxide has steadily risen from ∼280 ppm to over 380 ppm in the last 200 years. Concern about anthropogenic climate change has generated research into technologies that limit the CO₂ emissions from the combustion of fossil fuels and into technologies that remove CO₂ directly from the atmosphere.

### Summary of Invention

The present invention provides a process for capturing and storing carbon dioxide comprising:
processing salt water in a salt water processing step, wherein the salt water processing step comprises an electrochemical step, and wherein end products of the salt water processing step comprise an acidic solution comprising hydrochloric acid and an alkaline solution comprising sodium hydroxide;
reacting the alkaline solution with carbon dioxide to capture the carbon dioxide; and
disposing of the acidic solution by reacting it with a mineral (e.g. rock) containing reduced iron (Fe, Fe⁺, Fe²⁺).

Other aspects, embodiments, and features of the invention will become apparent from the following detailed description when considered in conjunction with the accompanying drawings. The accompanying figures are schematic and are not intended to be drawn to scale. For purposes of clarity, not every component is labeled in every figure. Nor is every component of each embodiment of the invention shown where illustration is not necessary to allow those of ordinary skill in the art to understand the invention.

### Brief Description of the Drawings

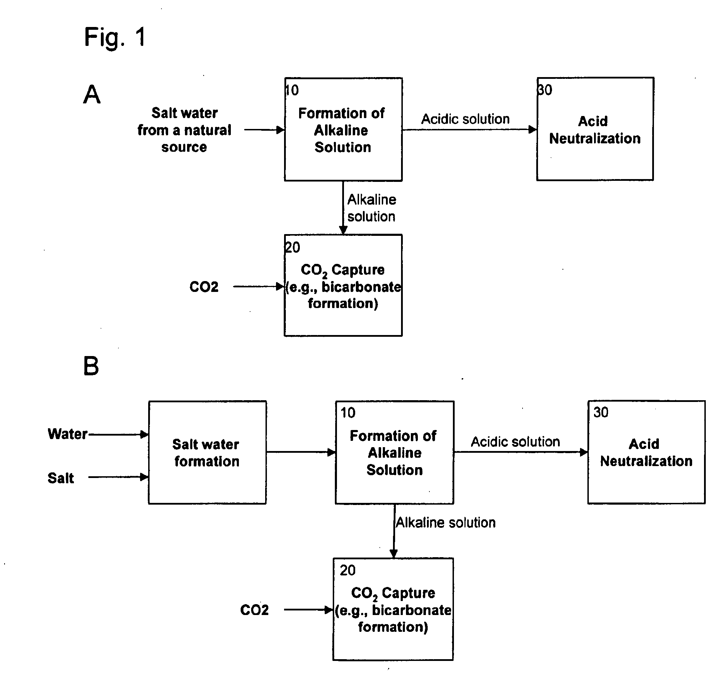

FIGS. 1 - 4 illustrate the steps of respective processes for capturing carbon dioxide according to embodiments of the invention.

### Detailed Description

Processes for capturing carbon dioxide are described. The carbon dioxide may be captured from the atmosphere and/or from the waste stream of a carbon dioxide point source (e.g., power plants, chemical plants, natural gas fields, oil fields, industrial sites, etc.). The processes involve capturing carbon dioxide using alkaline solutions (e.g., NaOH). The carbon dioxide reacts with the alkaline solution to form a product (e.g., NaHCO₃). As described further below, the alkaline solution may be made a number of different ways. In some of the processes, products produced during processing may be used to add value beyond carbon dioxide capture, as described further below.

FIGS. 1- 4 schematically illustrate general steps of the processes according to embodiments of the invention. FIG. 1 pertains to an embodiment of the invention in which an acidic species is neutralized. FIG. 2 shows an embodiment in which a sodium chloride solution is processed to produce sodium hydroxide (NaOH), chlorine gas (Cl₂), and hydrogen gas (H₂). FIG. 3 shows an embodiment in which a salt solution is processed, and acidic species and metal bicarbonate and/or metal carbonate are formed. FIG. 4 shows an embodiment in which biomass is added to water to form an alkaline solution.

It should be understood that the schematic processes shown in the figures are provided as examples though other processes are also within the scope of the present invention. The term "acidic species" refers to dissolved species (e.g., ions) that contribute to the acidity of a solution. The term "alkaline species" refers to dissolved species (e.g., ions) that contribute to the alkalinity of a solution.

Step 10 involves formation of an alkaline solution. Step 20 involves capturing carbon dioxide from the atmosphere and/or from the waste stream of a carbon dioxide point source. For example, the carbon dioxide may be captured by reacting it with the alkaline species in the solution produced in Step 10 and/or dissolving it in the alkaline solution produced in step 10. Step 30 (FIGS. 1A-1B) involves secondary processing of products produced during the process. The steps are further described below.
In step 10, any suitable technique may be used to form the alkaline solution (e.g., a hydroxide solution such as sodium hydroxide).

In some embodiments, step 10 (as shown in FIG. 1A) involves processing water having a sufficient concentration of ions from dissolved salts, for example, ions of chlorine, fluorine, bromine, sulfate, and nitrate, amongst others, to form the alkaline solution, as described further below. Water having a sufficient concentration of chlorine ions (e.g., from NaCl) may be particularly preferred in some cases. In some embodiments, it may be preferable that the ions are conservative ions (i.e., ions whose concentrations are independent of moderate changes in pH). In some embodiments, the water (e.g., "salt water" from an ocean or sea (FIG. 1A)) may naturally have a sufficient concentration of ions from dissolved salts. In other embodiments (FIG. 1B), it may be preferable to add appropriate anions to the water (e.g., "fresh water"). For example, halite (NaCl) of other types of salt may be added to the water. The water may be a river, lake, or aquifer and the salt may be a natural salt deposit.

In some embodiments, it may be preferable for the body (or source) of water to be large to provide a sufficient supply of water for the process. For example, the body of water may be an ocean, a sea, a lake, or a river. Water may be supplied from the body of water to a plant where the additional processing steps are performed.

The embodiments illustrated in FIGS. 1-3 involve the processing of a salt solution into an acidic solution and an alkaline (i.e., a basic) solution. Electrochemical processes are used in the separation of a salt solution into an acidic and an alkaline (i.e., a basic) solution. These processes include electrolytic processes, Chloralkali type processes, processes involving diaphragm cells, processes involving membranes such as bipolar membrane electrodialysis, or any other appropriate electrochemical process For example, by various known electrochemical processes water containing Na⁺ and Cl⁻ ions may be processed electrolytically to produce sodium hydroxide, chlorine gas, and hydrogen gas according to the following reaction:

Na⁺+Cl⁻+H₂O → Na⁺ + OH⁻ + ½ Cl₂ + ½ H₂

The embodiments illustrated in FIGS. 1-4 involve the reaction of CO₂ with the alkaline species and/or the dissolution of CO₂ into the solution including alkaline species. Whatever method is employed to produce the acidic and alkaline solutions, the methods can involve neutralizing the alkaline species with CO₂. In the case that NaOH forms the alkaline species, then the final step produces NaHCO₃ solution and/or Na₂CO₃ solution. Therefore, embodiments of the invention may extend any known method of producing caustic soda (NaOH) to the production of sodium bicarbonate and/or disodium carbonate (thereby capturing CO₂) by adding one more processing step to the caustic soda. In some embodiments, the process involves the co-production of sodium bicarbonate (and/or disodium carbonate), chlorine gas, and hydrogen gas by reacting the NaOH co-produced with chlorine gas and hydrogen gas with CO₂ from a source of CO₂ for the purpose of capturing and storing CO₂ and carbonate and bicarbonate species. Therefore, one embodiment of the invention constitutes the co-production of NaHCO₃ solution and/or Na₂CO₃ solution with Cl₂ gas and H₂ gas with the capture of CO₂.

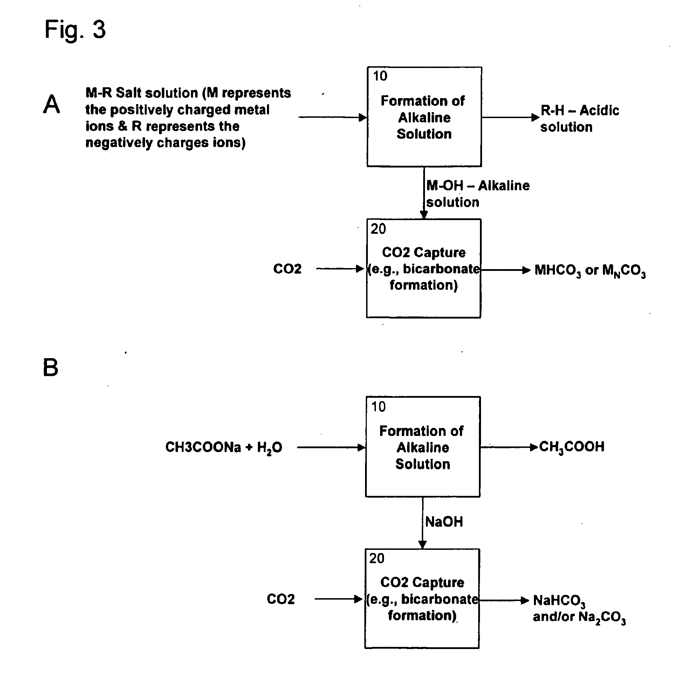

It should be understood that though the above description relates to Cl₂ and H₂, other suitable gases and corresponding acids may also be used in processes of the invention. In some embodiments (FIGS. 3A-3B), it may be preferable if chlorine is not produced when forming the alkaline solution. Thus, the products when forming the alkaline solution may be free of chlorine. The embodiments illustrated in FIG. 3A involves the separation of any salt (e.g., an organic salt like sodium acetate (CH₃COONa) as depicted in FIG. 3B) into an acidic solution and an alkaline or basic solution. As an example, sodium hydroxide may be generated *without* using chlorine ions. In some of these embodiments, an organic acid (e.g., acetic acid, lactic acid, or formic acid) may be co-produced with sodium hydroxide:

CH₃COO⁻ + Na⁺ + H₂O → CH₃COOH + NaOH

The final step of the embodiments illustrated in FIGS. 3A-3B involves the reaction of the alkaline solution with CO₂ from a source of CO₂ for the purpose of capturing and storing the CO₂ as a carbonate or bicarbonate species.

Ultimately, the embodiments depicted in FIGS. 3A-3B illustrates the co-production of acid with metal bicarbonate or metal carbonate. In general, the embodiments illustrated in FIGS. 3A-3B involve the processing of a salt solution (e.g., sodium acetate) into an alkaline or basic solution (e.g., metal hydroxide solution) and an acidic solution. The acid may be sold on the open market while the hydroxide specie are reacted to CO₂ to form MHCO₃ or MCO₃, where M indicates the metal ion in the original salt. Such an embodiment demonstrates the co-production of acid and for the purpose of carbon dioxide capture. The general net reaction for such an embodiment is:

CO₂ + R-M + H₂O → MHCO₃ + R-H

In other embodiments, step 10 of FIGS. 1A-1B and 3A-3B may include an electrodialysis process such as electro-electrodialysis, salt splitting or bipolar membrane electrodialysis. These processes uses an applied voltage to drive opposite-charged ions in a salt solution in opposite directions through membranes engineered for high permeability of ions of a particular charge state. Charge-compensating ions are generated by the electrolysis of water, resulting in acid and base exit streams. A suitable process is described in "Electrodialysis Process With Bipolar Membranes (EDBM) in Environmental Protection - A Review", by Tongwen Xu, Resources, Conservation and Recycling (2002), which is incorporated herein by reference.

In some embodiments, as indicated by FIG. 3A, the process may involve co-production of sulfuric acid and sodium hydroxide. For example, the sulfuric acid may be produced from a reaction between metal sulfate salt (e.g., sodium sulfate) and water. A bipolar membrane electrodialysis process may be used. A representative reaction is:

Na₂SO₄ + 2H₂O → 2NaOH + H₂SO₄

It should be understood that in any of the above reactions, sodium may be replaced with another suitable cation such as potassium.

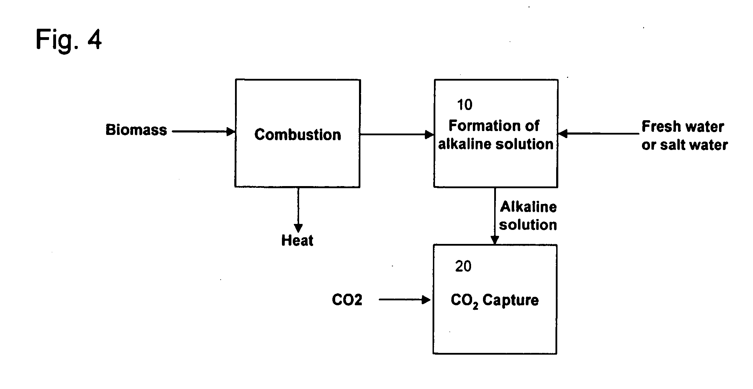

Other embodiments (e.g., as shown in FIG. 4) can involve creating the alkaline solution by adding ash from biomass burning or biomass gasification to a suitable body of water (e.g., "fresh water" or "salt water"). The ash can be a source of metal cations (e.g., Ca²⁺, Mg²⁺, K⁺, Na⁺) and carbonate ions (CO₃²⁻) . An alkaline (i.e., basic) solution can be produced by dissolving the ash in any some form of water (Step 10, FIG. 4). The process further comprises capturing carbon dioxide from a source of carbon dioxide by reacting it with the alkaline solution to form the bicarbonate or carbonate species (Step 20, FIG. 4).

Step 20 involves capturing CO₂ using the alkaline solution produced in step 10. In some embodiments, CO₂ may be reacted with alkaline species through a spray tower. In some embodiments, step 20 involves adding the alkaline or basic solution (e.g., NaOH) produced in step 10 directly to a body of water (e.g., the ocean). In these embodiments, the process will increase the concentration of hydroxide ions and cations (e.g., in the form of NaOH) relative to the concentration of hydrogen ions and anions (e.g., in the form of HCl) in the body of water. In such an embodiment, the process will have increased the alkalinity of the body of water. The removal of anions from a body of water increases the alkalinity of the body of water because alkalinity is defined as the concentration difference between cations and anions:

Alkalinity = 2[Ca²⁺] + [K⁺] + 2[Mg²⁺] + [Na] - [Cl¹⁻]-2[SO₄²⁻]

The small excess charge of the cations over anions is mainly balanced by the concentrations of carbonate and bicarbonate ions. Increasing the alkalinity of the body of water causes a shift in the dissolved inorganic carbon (DIC) partitioning to balance the increase in positive conservative charge. That partitioning shift decreases the concentration of CO₂(aq), which is the fraction of DIC that is able to interact directly with the CO₂(g) in the atmosphere. As a result of decreasing the CO₂(aq) fraction of DIC, the surface water becomes under-saturated in CO₂(aq) and additional CO₂(g) dissolves from the atmosphere into the body of water. The quantity of additional atmospheric CO₂(g) that dissolves into the body of water is related to the increase in alkalinity. Therefore, in one embodiment of this invention, the removal and neutralization (step 30, FIGS. 1A-1B) of hydrochloric acid (HCl) from the ocean causes the water to remove CO₂(g) from the atmosphere. In this embodiment, the CO₂ that is removed from the atmosphere will be chemically stored in the body of water as dissolved organic carbon (CO₂(aq), HCO₃⁻, and CO₃²⁻).

In this manner, processes of the invention effectively accelerate the natural CO₂(g) uptake process of a body of water (e.g., an ocean). Additionally, the processes can enable mankind to better control the pH of bodies of water (e.g., an ocean). Currently, the uptake of anthropogenic CO₂ causes the pH of bodies of water to drop. Removal and neutralization (step 30, FIGS. 1A-1B) of acid (e.g., HCl) will cause the pH of surface water to rise, but the additional CO₂ that necessarily dissolves in the water will balance that rise in pH. By controlling the rate of removal from the water, the pH can be maintained while the concentration of atmospheric CO₂ is brought down to the desired level.

The embodiment of this invention illustrated in FIG. 4 can also be used to capture CO₂ by adding the ash-based alkaline solution to a body of water for the purpose of increasing the alkalinity of that water. In some cases, the body of water may be under-saturated with respect to calcite (CaCO₃), though it should be understood that not all processes are so limited. When calcium based alkalinity is added to a body of water that is under-saturated with respect to calcite, the net result is the uptake of carbon dioxide from the atmosphere. Furthermore, using ash rich in magnesium, potassium, or sodium, the body of water used does not need to be under-saturated with respect to calcite in order to have carbon dioxide capture and storage.

In some embodiments, step 20 involves reacting the alkaline solution (e.g., sodium hydroxide or other suitable alkaline solution) with carbon dioxide from the atmosphere to produce a reaction product (e.g., sodium bicarbonate and/or disodium carbonate, or other suitable compound). In processes of the invention, the reaction product is not used to re-generate the alkaline species which are used to capture carbon dioxide. That is, the reaction product is used for other purposes than re-generating alkaline species used to capture carbon dioxide. As described further below, the reaction product may be disposed of and/or otherwise further processed. For example, the reaction product may be disposed of by introducing the product into a suitable body of water (e.g., the ocean) or land-based environment (e.g., landfill, mine)

One representative reaction in which carbon dioxide reacts with alkaline species produced in step 10 is:

NaOH + CO₂ → NaHCO₃

For example, to facilitate the reaction, a pool of highly concentrated sodium hydroxide (NaOH) may be collected. The pool may be exposed to the atmosphere causing the reaction to occur. In some processes, the sodium hydroxide (or other suitable compound) may be sold and shipped to a carbon dioxide point source (e_{.}g., power plants, chemical plants, natural gas fields, oil fields, industrial sites, etc.). The waste stream produced by the carbon dioxide point source may be reacted with a concentrated pool of sodium hydroxide to cause the reaction to occur. The reaction of sodium hydroxide with carbon dioxide, thus, reduces the concentration of carbon dioxide in the atmosphere or in the waste stream of a carbon dioxide from a point source. The sodium bicarbonate and/or disodium carbonate that is formed from the reaction of the sodium hydroxide with the carbon dioxide may be added to the body of water, or otherwise collected and disposed.

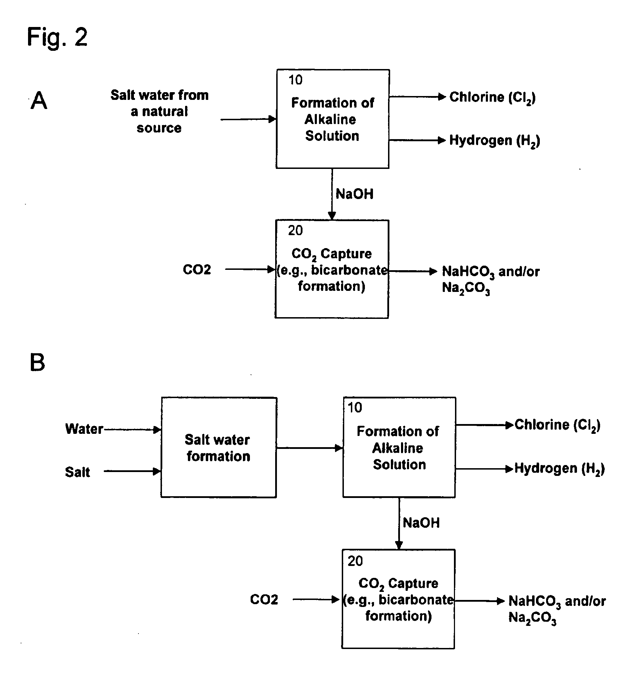

The various embodiments illustrated in FIGS. 1 - 3 differ in how the non-alkaline products produced during the process are further processed. For example, in some embodiments (FIG. 2A-2B), the chlorine gas and/or hydrogen gas produced is sold on the open market. In other embodiments, the hydrogen gas produced may be combined with oxygen from the atmosphere to form water and useful energy according to the following reaction:

½ H₂ + ¼ O₂ → ½ H₂O

In some embodiments (FIGS. 1A-1B), the chlorine gas and hydrogen gas formed in step 10 may react to form HCl according to the following equation:

½ H₂ + ½ Cl₂ → HCl

In some of these embodiments, the chlorine gas and hydrogen gas formed in step 10 may be combined in a fuel cell or a hydrogen gas turbine that produces either HCl(g) or HCl(aq) and electricity that can be harnessed for use in other processing steps or otherwise utilized. The application of the HCl fuel cell will likely be a valuable element of the process because the electricity produced in the fuel cell may substantially decrease of the operational costs.

The HCI produced in reaction by the combination of Cl₂ and H₂ can be removed for further processing (e.g., step 30, FIG. 1A-1B). Such processing can ensure that the acid is not returned to the body of water. For example, any chloride ion that returns to the body of water without a corresponding conservative cation can reverse gains achieved in the process by causing carbon dioxide to degas to the atmosphere. Therefore, the acid is typically disposed of in a way that effectively neutralizes the acid and/or combines its anions with conservative cations.

Step 30 of FIGS. 1A-1B involves reacting HCl (or other acid) with a mineral containing reduced iron (Fe, Fe⁺, Fe²⁺). Suitable rock or mineral sources include silicate mineral and/or rocks, mafic minerals (e.g., wustite, olivine, pyroxene, amphibole, biotite mica), magnetite, mafic and ultramafic rocks, serpentinites, basalts, and iron ores.

It should be understood that step 30 of FIGS. 1A-1B may include the dissolution of any rock by HCl that combines the chlorine ions with conservative cations (e.g., Mg²⁺, Al²⁺, Al³⁺, Fe²⁺, Fe³⁺, K⁺, Ca²⁺, Na⁺ etc.). Once the HCl is reacted with the mineral and matches the cations to the chloride ions, then the system is complete and the body of water whose alkalinity was increased can permanently remove atmospheric CO₂(g). It should be noted that dissolution of minerals by HCl is typically an exothermic reaction and some of the heat generated during the dissolution may be recovered and used to run another part of the process.

In some embodiments of the invention, the acid is disposed of by reacting with rocks and/or minerals (e.g., silicate rocks and/or minerals) in a reaction vessel. In such embodiments, the rocks and/or minerals are transported to the reaction vessel. In some cases, the rocks and/or minerals may be processed to form smaller rocks and/or minerals. Once in the reaction vessel, the rocks and/or minerals are combined with the acid, and the dissolution of the rocks and/or minerals neutralizes the acid.

In other embodiments, the acid is neutralized through reaction with and/or dissolution of rocks and/or minerals in-situ (i.e., rocks and/or minerals in their natural location). In such processes, the acidic solution may be injected into or sprayed onto the rock and/or mineral (e.g., basaltic, ultramafic rock and/or mineral formations). In such processes, the acid can be neutralized when it contacts the rock and/or mineral formation, while flowing through and/or across the rock and/or mineral formation. The seepage flow may be engineered such that that time scale of acid flow through the rock and/or mineral formation would be slow relative to the timescale of the rock and/or mineral dissolution. If the timescales are appropriately engineered, then the acid will be largely neutralized when the dissolution products reach a body of water (e.g., the ocean).

The acid is disposed of in an exothermic reaction and also generates additional useful energy. The purpose of using reduced iron containing minerals and/or rocks is that the oxidation of the iron can be used to generate useful energy. For example, mafic and ultramafic rock, basalt, and certain iron ore all contain reduced iron. The acid (e.g., HCl) solution can dissolve these minerals in reactions similar to the following dissolution reaction of HCl and olivine:

(Mg,Fe)₂SiO₄+4HCl → 2(Mg,Fe)Cl₂ + SiO₂+ 2H₂O

During the dissolution process, the following reaction will sometimes occur as the Fe²⁺ is oxidized to Fe³⁺ by the formation of H₂(g):

Fe₂SiO₄ + 6HCl → 2FeCl₃ + SiO₂ + 2H₂O + H₂

That reaction results in the production of H₂. In reactions similar to dissolution of olivine, it may be difficult to predict how much of the iron silicate will react with HCl to form FeCl₂ and how much of it will react with HCl to form FeCl₃. It is believed, however, that a subset of the Fe²⁺ will be oxidized to Fe³⁺ and that H₂ will form when Fe²⁺ is oxidized. The hydrogen gas that is generated can be used to generate electricity, or it can be sold on the open market. There is a wide variety of minerals that could be used for this process step (e.g., mafic and ultramafic rock, basalt, and/or iron ores) including those that contain reduced iron for the purpose of disposing of the acid and oxidizing the reduced iron.

In some embodiments, the fraction of the Fe²⁺ that is not oxidized during the dissolution reaction described above can be used in a fuel-cell to generate electricity by oxidizing the FeCl₂ to FeCl₃. Generally, the dissolution of any rock containing reduced iron with an acid will produce a solution of reduced iron cations, the anion from the acid, and H₂O. As an example, the dissolution of any rock containing reduced iron by HCl will produce some FeCl₂. Additionally, as described above, a portion of the Fe²⁺ will be oxidized to Fe³⁺, and when the Fe²⁺ is oxidized, then the H⁺ in solution will be reduced to H₂(g). As noted above, the portion of the Fe²⁺ that is not oxidized to Fe³⁺ forms FeCl₂. That FeCl₂ can be reacted with additional HCl and O₂ in a fuel-cell to fully oxidize the remaining Fe²⁺ to Fe³⁺. The overall fuel-cell reaction is described by the following net reaction:

4FeCl₂ + 4HCl + O₂ → 4FeCl₃ + 2H₂O

The electrical energy generated from the oxidation of FeCl₂ to FeCl₃ can either be sold or used to run the process by producing more acid from seawater. The useful energy generated during the dissolution of minerals containing reduced iron can be used in other steps in the process.

In a different embodiment, a FeCl₂-O₂ fuel cell could be used that produce ferric hydroxide (Fe(OH)₃) as a product.

As noted above, step 30 of FIGS. 1A-1B may also involve processing other gaseous components removed from the body of water in addition to processing the acid removed. In these embodiments, step 30 may also involve processing one or more gases (e.g., Cl₂ and H₂) produced in step 10. In these cases, only a portion of those gases may be used to produce the acidic species. The remainder of the gases may be used to react with reactive species in step 30. In these embodiments, the reactive species (e.g., mineral or rock sources that contain iron) may be reacted with a mixture of the acid (HCl) and Cl₂; or a mixture of the acid, H₂ and Cl₂. Therefore, in these embodiments, the reactive species react with both an acid (e.g., HCl) and an oxidizing agent (e.g., Cl₂). The result is that any reduced metals (such as ferrous iron) are oxidized with chlorine gas during or after dissolution. These embodiments may simplify energy generation from the oxidation of ferrous sources.

Using the mafic olivine mineral fayalite (i.e., Fe₂SiO4) as an example, Fe₂SiO₄ is converted into FeCl₃, SiO₂, and H₂O during the reaction with HCl (i.e., the acid) and Cl₂ (i.e., the halogen gas). Depending somewhat on the conditions of the reaction, any hydrogen production from the dissolution of the ferrous minerals would also react exothermically with Cl₂ (i.e., the halogen gas) forming HCl (i.e., the acid) and further dissolving the rocks/minerals.

It should be understood that processes of the invention may include variation to those described above that would be recognized by those of ordinary skill in the art.

Processes of the invention can have a number of advantages. One benefit is that the process removes carbon dioxide from the atmosphere which leads to a number of environmental advantages. Another benefit of the process is that some of the steps (e.g., the formation of HCl in a fuel cell) produce useful energy that can be used in other aspects of the process. The energy may be generated, for example, from hydrogen production during the dissolution of reduced minerals (e.g., minerals comprising iron), electricity production through a fuel cell (e.g., FeCl₂-HCl-O₂; FeCl₂-O₂), or heat generated during the dissolution of silicate rocks and minerals. Because the energy cost is a large component of the total cost for most conventional CO₂ capture and storage technologies, the low energy cost of the process represents a valuable technological advancement. An additional benefit of the process is the co-production of valuable chemicals with alkaline or basic solutions, which are used to capture CO₂. For example, the embodiments illustrated in FIGS. 2A-2B involves the co-production of Cl₂ gas and H₂ gas with the reaction of CO₂ and NaOH to form NaHCO₃. In another example (e.g., as shown in FIGS. 3A-3B), valuable acid solutions (e.g., acetic acid) are co-produced with the reaction of CO₂ and metal hydroxides (M-OH) to form MHCO₃. The co-production of valuable chemicals is a significant advantage of the process as the sale of such chemicals can be profitable.

The following examples are meant to be illustrative and are not limiting in any way.

### Example 1

The following diagrams illustrate examples of processes according to embodiments of the invention. Diagram A shows carbon dioxide capture and acid disposal. Calcium has been used to represent any metal found in silicate rocks. Diagram B shows a process with steps to recover energy through the oxidation of silicate rocks. Iron has been used to represent any metal found in silicate rocks that can be oxidized (e.g., iron and manganese). The chemistry for the process in Diagram B is shown below the figure.

### Step 1a: Acid removal, HCl formation, and CO2 capture (See example 1 diagram below)

*Na⁺* + *Cl⁻* + *H₂O*→ *Na⁺* +*OH⁻* + ½*Cl₂* + ½*H₂*

### Step 1b: Production of HCl

½*Cl₂*+½*H₂*→*HCl*

### Step 1c: CO₂ Capture

*NaOH* + *CO₂* → *NaHCO₃*

### Step 2: Dissolution of mineral and acid neutralization

In step 2, a portion of the Fe₂SiO₆ will react with HCl to form FeCl₃ (reaction 2a), while another portion of the Fe₂SiO₆ will react with HCl to form FeCl₂ (reaction 2b). For the purposes of this example, we assume that 1/3 of the mineral will react to form FeCl₃ while the other 2/3 will react to form FeCl₂.

### Reaction 2a:

*HCl* + ¹/₆ *Fe₂SiO₄* →¹/₃ *FeCl₃* + ¹/₆ *SiO₂* + ⅓ *H₂O* + ¹/₆ *H₂*

### Reaction 2b:

¹/₄ *Fe₂SiO₄* + *HCl* →¹/₂ *FeCl₂* + ¹/₄ *SiO₂* + ¹/₂ *H₂O*

### Step 3: Energy Recovery through H₂ and FeCl₂ oxidation

In step 2, the Fe₂SiO₄ was reacted with HCl to form either H₂ or FeCl₂. As a result, step 3 employs two separate fuel cells to recover energy by oxidizing both the H₂ and FeCl₂ separately.

### Reaction 3a:

¹/₆*H*₂+ ¹/₁₂*O*₂→¹/₆*H*₂*O*

### Reaction(s) 3b:

NOTE: When FeCl₂ is run in a fuel-cell, the reaction requires the presence of an additional ¹/₂ a mole of HCl for each mole of NaOH originally produced.

¹l₂*NaCl*+ ¹/₂*H*₂*O→*¹/₂*HCl*+¹/₂*NaOH*

¹/₂ *NaOH* + ¹/₂ *CO*₂ →¹/₂ *NaHCO*₃

¹/₂ *FeCl₂* + ¹/₂ *HCl* + ¹/₈ *O*₂ → *¹*/*₂ FeCl₃* + ¹/₄ *H*₂*O*

| Example 1: |
|---|
| 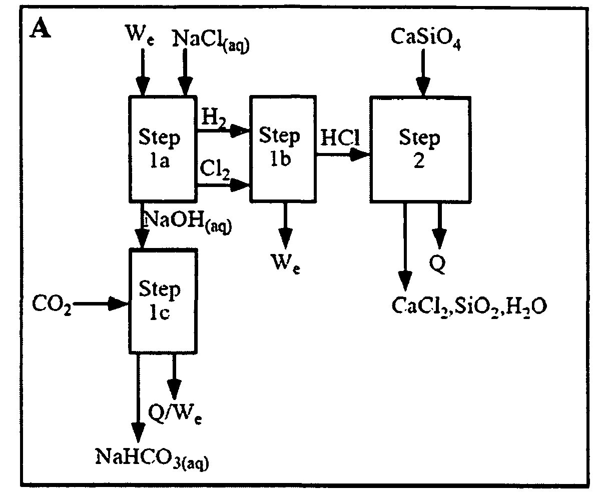 |
| 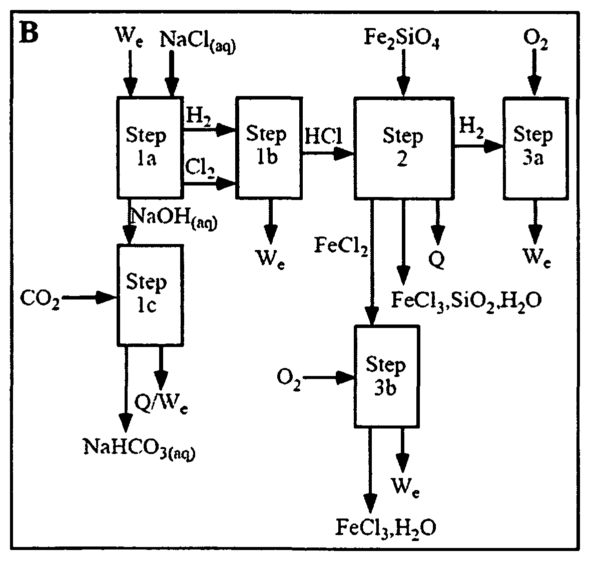 |

### Example 2

The following diagram illustrates an example of a process according to an embodiment of the invention. In this process silicate rocks and minerals are oxidized using chlorine gas.

### Step 1a: Acid removal, HCl formation, and CO2 capture

*Na⁺*+*Cl⁻*+*H*₂*O→Na⁺*+*OH⁻*+ ¹/₂*Cl*₂+¹/₂*H*₂

### Step 1b: Production of HCl

²/₆*Cl₂*+²/₂*H₂*→⁴/₆*HCl*

### Step 1c: CO₂ Capture

*NaOH* + *CO*₂ → *NaHCO*₃

### Step 2: Dissolution of mineral and acid neutralization.

### Reaction 2a:

⁴/₆ *HCl* +¹/₆ *Fe₂SiO₄* + ¹/₆ *Cl*₂ *→*²/₆ *FeCl*₃ + ¹/₆*SiO*₂ *+* ²/₆ *H*₂*O*

### Step 3: Energy Recovery through H₂ and FeCL₂ oxidation

The additional 1/6H₂ unit produced in step 1a and not employed to form HCl in step 1b is oxidized with O₂ for form 1/6H₂O and recover some electrical work.

### Reaction 3a:

¹/₆ *H*₂ + ¹/₁₂ *O₂*→¹/₆ *H*₂*_{*}O*

### Net reaction:

¹/₁₂*O*₂ + *NaC*/ + ¹/₂*H*₂*O*+*CO*₂ + ¹/₆ *Fe*₂*SiO*₄ *→NaHCO*₃ + ¹/₃ *FeCl*₃ + ¹/₆*SiO*₂

Having thus described several aspects and embodiments of this invention, it is to be appreciated various alterations, modifications and improvements will readily occur to those skilled in the art. Such alterations, modifications and improvements are intended to be part of this disclosure, and are intended to be within the spirit and scope of the invention. Accordingly, the foregoing description and drawings are by way of example only.

## Claims

1. A process for capturing and storing carbon dioxide comprising:
processing salt water in a salt water processing step, wherein the salt water processing step comprises an electrochemical step, and wherein end products of the salt water processing step comprise an acidic solution comprising hydrochloric acid and an alkaline solution comprising sodium hydroxide;
reacting the alkaline solution with carbon dioxide to capture the carbon dioxide; and
disposing of the acidic solution by reacting it with a mineral (e.g. rock) containing reduced iron (Fe, Fe⁺,Fe²⁺).

2. The process of claim 1, wherein the salt water comprises salt water provided from a natural source.

3. The process of claim 2, wherein the natural source comprises a body of water that comprises an ocean, a sea, or a lake.

4. The process of claim 1, wherein the salt water is formed by a process comprising adding salt to water to form an artificial salt solution.

5. The process of claim 1, wherein the electrochemical step is an electrodialysis process.

6. The process of claim 1, wherein the electrochemical step produces a chlorine gas, a hydrogen gas, and the sodium hydroxide.

7. The process of claim 6, wherein the chlorine gas and the hydrogen gas react to form HCl in a fuel cell to produce electricity for the process for capturing carbon dioxide.

8. The process of claim 1, wherein the carbon dioxide comprises carbon dioxide from a waste stream of carbon dioxide from a point source.

9. The process of claim 1, wherein the mineral is selected from the group consisting of silicate rocks, silicate minerals, mafic minerals, magnetite, mafic rocks, ultramafic rocks, serpentinites, basalts, and iron ores.

10. The process of claim 1, wherein the electrochemical process is a diaphragm cell process.

11. The process of claim 8, wherein the point source is selected from the group consisting of power plants, chemical plants, natural gas fields, oil fields, and industrial sites.

12. The process of claim 5, wherein the electrodialysis process is a bipolar membrane electrodialysis process.

13. The process of claim 1, wherein reacting the acidic solution with a mineral generates heat for the process for capturing carbon dioxide.

14. The process of claim 1, wherein reacting the acidic solution with a rock and/or mineral comprises reacting the acidic solution with the mineral in the natural location of the rock and/or mineral.

15. The process of claim 14, wherein the acidic solution is injected into or sprayed onto the rock and/or mineral.

16. The process of claim 1, wherein no chlorine is produced in the salt water processing step.

17. The process of claim 6, further comprising oxidizing the hydrogen gas with oxygen to form water and electricity.

18. The process of claim 17, wherein the hydrogen gas is oxidized with oxygen in a hydrogen gas turbine to form water and electricity.

19. the process of claim 17, wherein the hydrogen gas is oxidized with oxygen in a fuel cell to form water and electricity.

20. The process of claim 1, wherein reacting the alkaline solution with carbon dioxide to capture carbon dioxide comprises reacting the alkaline solution with carbon dioxide through a spray tower.

## Patentansprüche

1. Verfahren zur Gewinnung und Lagerung von Kohlendioxid, wobei das Verfahren folgendes umfasst:
Verarbeiten von Salzwasser in einem Salzwasserverarbeitungsschritt, wobei der Salzwasserverarbeitungsschritt einen elektrochemischen Schritt umfasst, und wobei Endprodukte des Salzwasserverarbeitungsschritts eine saure Lösung, die Chlorwasserstoffsäure umfasst, und eine alkalische Lösung umfasst, die Natriumhydroxid umfasst;
Reagieren der alkalischen Lösung mit Kohlendioxid zur Gewinnung des Kohlendioxids und
Verwerfen der sauren Lösung durch Reaktion mit einem Mineral (beispielsweise Gestein), das reduziertes Eisen (Fe, Fe⁺, Fe²⁺) enthält.

2. Verfahren gemäß Anspruch 1, wobei das Salzwasser Salzwaser aus einer natürlichen Quelle umfasst.

3. Verfahren gemäß Anspruch 2, wobei die natürliche Quelle ein Gewässer umfasst, das einen Ozean, ein Meer oder einen See umfasst.

4. Verfahren gemäß Anspruch 1, wobei das Salzwasser durch ein Verfahren gebildet wird, welches zur Bildung einer künstlichen Salzlösung Hinzufügen von Salz zu Wasser umfasst.

5. Verfahren gemäß Anspruch 1, wobei der elektrochemische Schritt ein Elektrodialyseverfahren ist.

6. Verfahren gemäß Anspruch 1, wobei der elektrochemische Schritt ein Chlorgas, ein Wasserstoffgas und das Natriumhydroxid herstellt.

7. Verfahren gemäß Anspruch 6, wobei das Chlorgas und das Wasserstoffgas zur Bildung von HCl in einer Brennstoffzelle reagieren, wodurch Elektrizität für das Verfahren zur Gewinnung von Kohlendioxid hergestellt wird.

8. Verfahren gemäß Anspruch 1, wobei das Kohlendioxid Kohlendioxid aus einem Kohlendioxidabgasstrom einer Punktquelle umfasst.

9. Verfahren gemäß Anspruch 1, wobei das Mineral ausgewählt ist aus Silikatgesteinen, Silikatmineralien, Mafischmineralien, Magnetit, Mafischgesteinen, Ultramafischgesteinen, Serpentiniten, Basalten und Eisenerzen.

10. Verfahren gemäß Anspruch 1, wobei der elektrochemische Schritt ein Diaphragma-Zell-Verfahren ist.

11. Verfahren gemäß Anspruch 8, wobei die Punktquelle ausgewählt ist aus Gaskraftwerken, chemischen Anlagen, Erdgasfeldern, Ölfeldern und Industriestätten.

12. Verfahren gemäß Anspruch 5, wobei das Elektrodialyseverfahren ein Bipolarmembran-Dialyseverfahren ist.

13. Verfahren gemäß Anspruch 1, wobei die Reaktion der sauren Lösung mit einem Mineral Wärme für das Verfahren zur Gewinnung von Kohlendioxid erzeugt.

14. Verfahren gemäß Anspruch 1, wobei die Reaktion der sauren Lösung mit einem Gestein und/oder Mineral die Reaktion der sauren Lösung mit dem Mineral an dem natürlichen Ort des Gesteins und/oder Minerals umfasst.

15. Verfahren gemäß Anspruch 14, wobei die saure Lösung in oder auf das Gestein und/oder Mineral injiziert oder gesprüht wird.

16. Verfahren gemäß Anspruch 1, wobei bei dem Salzwassersgewinnungsschritt kein Chlor hergestellt wird.

17. Verfahren gemäß Anspruch 6, welches weiterhin die Oxidation des Wasserstoffgases mit Sauerstoff zur Bildung von Wasser und Elektrizität umfasst.

18. Verfahren gemäß Anspruch 17, wobei das Wasserstoffgas mit Sauerstoff in einer Wasserstoffgasturbine oxidiert wird zur Bildung von Wasser und Elektrizität.

19. Verfahren gemäß Anspruch 17, wobei das Wasserstoffgas mit Sauerstoff in einer Brennstoffzelle oxidiert wird zur Bildung von Wasser und Elektrizität.

20. Verfahren gemäß Anspruch 1, wobei die Reaktion der alkalischen Lösung mit Kohlendioxid zur Gewinnung von Kohlendioxid die Reaktion der alkalischen Lösung mit Kohlendioxid durch einen Sprühturm umfasst.

## Revendications

1. Procédé de capture et de stockage de dioxyde de carbone comprenant :
le traitement d'eau salée dans une étape de traitement d'eau salée, dans lequel l'étape de traitement d'eau salée comprend une étape électrochimique, et dans lequel des produits finaux de l'étape de traitement d'eau salée comprennent une solution acide comprenant de l'acide chlorhydrique et une solution alcaline comprenant de l'hydroxyde de sodium ;
la réaction de la solution alcaline avec du dioxyde de carbone pour capturer le dioxyde de carbone ; et
l'élimination de la solution acide en la faisant réagir avec un minéral (par exemple une roche) contenant du fer réduit (Fe, Fe⁺, Fe²⁺) .

2. Procédé selon la revendication 1, dans lequel l'eau salée comprend de l'eau salée provenant d'une source naturelle.

3. Procédé selon la revendication 2, dans lequel la source naturelle comprend un corps d'eau qui comprend un océan, une mer, ou un lac.

4. Procédé selon la revendication 1, dans lequel l'eau salée est formée par un procédé comprenant l'ajout de sel à de l'eau pour former une solution salée artificielle.

5. Procédé selon la revendication 1, dans lequel l'étape électrochimique est un procédé d'électrodialyse.

6. Procédé selon la revendication 1, dans lequel l'étape électrochimique produit un gaz de chlore, un gaz d'hydrogène, et de l'hydroxyde de sodium.

7. Procédé selon la revendication 6, dans lequel le gaz de chlore et le gaz d'hydrogène réagissent pour former du HCl dans une pile à combustible pour produire de l'électricité pour le procédé de capture de dioxyde de carbone.

8. Procédé selon la revendication 1, dans lequel le dioxyde de carbone comprend du dioxyde de carbone provenant d'un flux de déchets de dioxyde de carbone provenant d'une source ponctuelle.

9. Procédé selon la revendication 1, dans lequel le minéral est choisi parmi le groupe consistant en des roches de silicate, des minéraux de silicate, des minéraux ferromagnésiens, la magnétite, des roches ferromagnésiennes, des roches ultrabasiques, des serpentinites, des basaltes, et des minerais de fer.

10. Procédé selon la revendication 1, dans lequel le procédé électrochimique est un procédé par cellule à diaphragme.

11. Procédé selon la revendication 8, dans lequel la source ponctuelle est choisie parmi le groupe consistant en des centrales électriques, des installations chimiques, des champs de gaz naturel, des champs de pétrole, et des sites industriels.

12. Procédé selon la revendication 5, dans lequel le procédé d'électrodialyse est un procédé d'électrodialyse à membrane bipolaire.

13. Procédé selon la revendication 1, dans lequel la réaction de la solution acide avec un minéral génère de la chaleur pour le procédé de capture de dioxyde de carbone.

14. Procédé selon la revendication 1, dans lequel la réaction de la solution acide avec une roche et/ou un minéral comprend la réaction de la solution acide avec le minéral sur le site naturel de la roche et/ou du minéral.

15. Procédé selon la revendication 14, dans lequel la solution acide est injectée dans ou vaporisée sur la roche et/ou le minéral.

16. Procédé selon la revendication 1, dans lequel aucun chlore n'est produit dans l'étape de traitement d'eau salée.

17. Procédé selon la revendication 6, comprenant en outre l'oxydation du gaz hydrogène avec de l'oxygène pour former de l'eau et de l'électricité.

18. Procédé selon la revendication 17, dans lequel le gaz hydrogène est oxydé avec de l'oxygène dans une turbine à gaz hydrogène pour former de l'eau et de l'électricité.

19. Procédé selon la revendication 17, dans lequel le gaz hydrogène est oxydé avec de l'oxygène dans une pile à combustible pour former de l'eau et de l'électricité.

20. Procédé selon la revendication 1, dans lequel la réaction de la solution alcaline avec du dioxyde de carbone pour capturer le dioxyde de carbone comprend la réaction de la solution alcaline avec du dioxyde de carbone à travers une tour de pulvérisation.
